(19) **Europäisches Patentamt / European Patent Office / Office européen des brevets**

(11) **EP 4 471 170 A1**

(12) **EUROPEAN PATENT APPLICATION**
published in accordance with Art. 153(4) EPC

(43) Date of publication:
04.12.2024 Bulletin 2024/49

(21) Application number: 22927309.9

(22) Date of filing: 28.11.2022

(51) International Patent Classification (IPC):
$C22C\ 38/00^{(2006.01)}$    $C22C\ 38/06^{(2006.01)}$
$C22C\ 38/60^{(2006.01)}$    $B33Y\ 10/00^{(2015.01)}$
$B33Y\ 80/00^{(2015.01)}$    $B33Y\ 70/00^{(2020.01)}$
$B22F\ 10/28^{(2021.01)}$    $B22F\ 10/36^{(2021.01)}$
$B22F\ 12/41^{(2021.01)}$

(52) Cooperative Patent Classification (CPC):
B22F 10/28; B22F 10/36; B22F 12/41; B33Y 10/00;
B33Y 70/00; B33Y 80/00; C22C 38/00;
C22C 38/06; C22C 38/60; Y02P 10/25

(86) International application number:
PCT/JP2022/043823

(87) International publication number:
WO 2023/157419 (24.08.2023 Gazette 2023/34)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 16.02.2022 JP 2022022452

(71) Applicant: JFE Steel Corporation
Tokyo 100-0011 (JP)

(72) Inventors:
• ENDOH, Kazuki
Tokyo 100-0011 (JP)

• KAWASAKI, Yoshiyasu
Tokyo 100-0011 (JP)
• TADA, Masaki
Tokyo 100-0011 (JP)
• TAKASHITA, Takuya
Tokyo 100-0011 (JP)
• HORIUCHI, Jun
Tokyo 100-0011 (JP)
• MASUOKA, Hiroyuki
Tokyo 100-0011 (JP)

(74) Representative: Haseltine Lake Kempner LLP
One Portwall Square
Portwall Lane
Bristol BS1 6BH (GB)

(54) **DEPOSITION MODEL AND METHOD FOR PRODUCING SAME**

(57) An additive manufacturing product including a steel matrix and ceramic particles dispersed in the steel matrix. The steel matrix has a chemical composition containing, in mass%, C: 0.030 % or more and 0.800 % or less, Si: 0.01 % or more and 2.50 % or less, Mn: 0.10 % or more and 8.00 % or less, P: 0.100 % or less, S: 0.0200 % or less, Al: 0.100 % or less, N: 0.1000 % or less, and O: 0.5000 % or less, with the balance being Fe and inevitable impurity. The steel matrix has a steel micro-structure where area fraction of pores is 0.50 % or less, area fraction of martensite in a region excluding pores is 90 % or more, average aspect ratio of prior austenite grains is 1.5 or more, and $L_{HA}/L$, high-angle grain boundary length $L_{HA}$ divided by grain boundary length $L$ with a misorientation angle of 20° or more and 50° or less, is 2.0 or more. Melting point of the ceramic particles is 2000 °C or more.

**Description**

TECHNICAL FIELD

The present disclosure relates to an additive manufacturing product and a method of producing same.

BACKGROUND

In recent years, improving fuel efficiency of automobiles has become an important issue from the viewpoint of global environment protection. Consequently, there is a growing trend of sheet metal thinning through increases in strength of automotive body material, thereby reducing the weight of automotive bodies. High strength steel sheets used for structural members and reinforcement members of automobiles are required to have excellent formability, but increasing strength of steel sheets leads to lower formability, resulting in cracking during press forming and high springback due to high yield stress. Further, high dimensional accuracy cannot be obtained after press forming. Further, residual stress remains in steel sheets after press forming, and therefore delayed fracture (hydrogen embrittlement) may be caused by hydrogen entering from an operating environment.

In recent years, additive manufacturing has attracted attention as a method that can easily form complex metal products and members. Additive manufacturing is also commonly referred to as 3D printing. Examples of additive manufacturing include a powder spray method, in which metal powder is irradiated with a heat source to melt the metal powder while being layered; and a powder bed method, in which metal powder laid down on a stage is irradiated with a heat source to melt the metal powder, which then solidifies, and this process is repeated to form layers.

In Patent Literature (PTL) 1, an additive manufacturing member consisting of ferrite and pearlite is proposed, formed by an additive manufacturing method using an electron beam.

CITATION LIST

Patent Literature

PTL 1: JP 2019-203148 A

SUMMARY

(Technical Problem)

Regarding the technology described in PTL 1, ferrite is typically a soft phase and there is room for further strength increases. Further, delayed fracture resistance and Young's modulus are not considered in the technology described in PTL 1.

In view of these circumstances, it would be helpful to provide an additive manufacturing product that has a tensile strength (TS) of 980 MPa or more, a high Young's modulus, and excellent delayed fracture resistance, and a method of producing same.

(Solution to Problem)

In order to solve the technical problem described above, the inventors have conducted intensive research from the viewpoint of chemical compositions and methods of production of additive manufacturing products in order to produce an additive manufacturing product that has high strength and excellent delayed fracture resistance, and made the following discoveries.

It was found that by repeatedly laying down a mixed powder of metal powder having an appropriately adjusted chemical composition including 0.030 mass% or more and 0.800 mass% or less of C and other alloying elements such as Ti and ceramic particles having a melting point of 2000 °C or more on a stage and irradiating the mixed powder laid down on the stage while scanning to perform additive manufacturing, an additive manufacturing product may be produced that has a steel microstructure that has an area fraction of pores of 0.50 % or less and an area fraction of martensite in a region excluding pores of 90 % or more, where a value obtained by dividing high-angle grain boundary length by grain boundary length with a misorientation angle of 20° or more and 50° or less is 2.0 or more, TS is 980 MPa or more, Young's modulus is high, and delayed fracture resistance is excellent.

The present disclosure is based on the aforementioned discoveries. Primary features of the present disclosure are as follows.

[1] An additive manufacturing product comprising a steel matrix and ceramic particles dispersed in the steel matrix, wherein

the steel matrix comprises a chemical composition containing (consisting of), in mass%,
C: 0.030 % or more and 0.800 % or less,
Si: 0.01 % or more and 2.50 % or less,
Mn: 0.10 % or more and 8.00 % or less,
P: 0.100 % or less,
S: 0.0200 % or less,
Al: 0.100 % or less,
N: 0.1000 % or less, and
O: 0.5000 % or less,
with the balance being Fe and inevitable impurity,
and a steel microstructure wherein

area fraction of pores is 0.50 % or less,
area fraction of martensite in a region excluding pores is 90 % or more,
average aspect ratio of prior austenite grains is 1.5 or more, and
$L_{HA}/L$, high-angle grain boundary length $L_{HA}$ divided by grain boundary length L with a misorientation angle of 20° or more and 50° or less, is 2.0 or more, and

melting point of the ceramic particles is 2000 °C or more.

[2] The additive manufacturing product according to [1] above, the chemical composition further containing, in mass%, at least one element selected from the group consisting of:

Ti: 0.200 % or less,
Nb: 0.200 % or less,
V: 0.200 % or less,
Ta: 0.10 % or less,
W: 0.10 % or less,
B: 0.0100 % or less,
Cr: 1.00 % or less,
Mo: 1.00 % or less,
Co: 1.000 % or less,
Ni: 1.00 % or less,
Cu: 1.00 % or less,
Sn: 0.200 % or less,
Sb: 0.200 % or less,
Ca: 0.0100 % or less,
Mg: 0.0100 % or less,
REM: 0.0100 % or less,
Zr: 0.100 % or less,
Te: 0.100 % or less,
Hf: 0.10 % or less, and
Bi: 0.200 % or less.

[3] The additive manufacturing product according to [1] or [2] above, wherein the ceramic particles are at least one selected from the group consisting of cubic boron nitride, titanium diboride, silicon carbide, and tungsten carbide.
[4] A method of producing the additive manufacturing product according to any one of [1] to [3] above, the method comprising:
repeatedly

laying down a mixed powder of metal powder having the chemical composition according to [1] or [2] above and ceramic particles on a stage, and
irradiating the mixed powder laid down on the stage with a heat source while scanning.

[5] The method of producing the additive manufacturing product according to [4] above, wherein the heat source is a laser beam or an electron beam.

[6] The method of producing the additive manufacturing product according to [4] or [5] above, wherein irradiation energy density of the heat source is 50 J/mm³ or more and 800 J/mm³ or less.

(Advantageous Effect)

According to the present disclosure, an additive manufacturing product is provided that has a tensile strength (TS) of 980 MPa or more, a high Young's modulus, and excellent delayed fracture resistance, as well as a method of producing same.

DETAILED DESCRIPTION

The following describes embodiments of the present disclosure. However, the present disclosure is not limited to the following embodiments.

The additive manufacturing product includes a steel matrix and ceramic particles dispersed in the steel matrix. First, appropriate ranges for a chemical composition of the steel matrix of the additive manufacturing product and reasons for such limitations are described. In the following description, "%" representing the content of a component element in the additive manufacturing product means "mass%" unless otherwise specified. Hereinafter, a numerical range expressed by using "to" means a range including numerical values described before and after "to" as the lower limit value and the upper limit value.

C: 0.030 % or more and 0.800 % or less

C is one of the important basic components of steel, and is particularly important in the present disclosure as an element that affects the area fraction of martensite and substructure of martensite. When C content is less than 0.030 %, the substructure of martensite becomes coarse and high-angle grain boundary length decreases, making achieving good delayed fracture resistance difficult. On the other hand, when the C content exceeds 0.800 %, the tetragonality of martensite increases, resulting in a larger volume change due to martensite transformation during additive manufacturing and an increase in the area fraction of pores. The C content is therefore 0.030 % or more and 0.800 % or less. The C content is preferably 0.050 % or more. The C content is more preferably 0.070 % or more. The C content is preferably 0.700 % or less. The C content is more preferably 0.650 % or less.

Si: 0.01 % or more and 2.50 % or less

Si is one of the important basic components of steel, and is particularly important in the present disclosure, as an element that inhibits carbide formation during additive manufacturing and affects martensite hardness. When Si content is less than 0.01 %, the effect of inhibiting carbide formation is insufficient and achieving the desired TS becomes difficult. On the other hand, when the Si content exceeds 2.50 %, embrittlement occurs and delayed fracture resistance deteriorates. The Si content is therefore 0.01 % or more and 2.50 % or less. The Si content is preferably 0.05 % or more. The Si content is more preferably 0.10 % or more. The Si content is preferably 2.00 % or less. The Si content is more preferably 1.80 % or less.

Mn: 0.10 % or more and 8.00 % or less

Mn is one of the important basic components of steel and is particularly important in the present disclosure as an element that affects the area fraction of martensite. Further, Mn is an element that improves hardenability. When Mn content is less than 0.10 %, soft phases such as ferrite are formed during additive manufacturing, making achieving the desired TS difficult. On the other hand, when the content of Mn, an austenite-stabilizing element, exceeds 8.00 %, retained austenite having a high degree of solute hydrogen is present, and delayed fracture resistance deteriorates. The Mn content is therefore 0.10 % or more and 8.00 % or less. The Mn content is preferably 0.50 % or more. The Mn content is more preferably 1.00 % or more. The Mn content is preferably 6.00 % or less. The Mn content is more preferably 5.00 % or less.

P: 0.100 % or less

P segregates in prior austenite grain boundaries, embrittling the grain boundaries, resulting in degradation of delayed fracture resistance. P content is therefore 0.100 % or less. A lower limit of the P content is not particularly specified. P is a solid-solution-strengthening element able to increase steel sheet strength, and therefore the P content is preferably 0.001 % or more. The P content is therefore 0.100 % or less. The P content is more preferably 0.001 % or more. The P content is preferably 0.070 % or less.

S: 0.0200 % or less

S is present as a sulfide and is an initiation point for hydrogen embrittlement cracking, which deteriorates delayed fracture resistance of steel sheets. S content is therefore 0.0200 % or less. A lower limit of the S content is not particularly specified. In view of production technology constraints, the S content is preferably 0.0001 % or more. The S content is therefore 0.0200 % or less. The S content is more preferably 0.0001 % or more. The S content is preferably 0.0050 % or less.

Al: 0.100 % or less

Al raises the $A_3$ transformation temperature and causes a large amount of ferrite to be included in the microstructure, making achieving the desired TS difficult. Al content is therefore 0.100 % or less. A lower limit of the Al content is not particularly specified. To inhibit carbide formation during additive manufacturing and to increase martensite hardness, the Al content is preferably 0.001 % or more. The Al content is therefore 0.100 % or less. The Al content is more preferably 0.001 % or more. The Al content is preferably 0.050 % or less.

N: 0.1000 % or less

N is present as a nitride, is an initiation point for hydrogen embrittlement cracking, and causes deterioration in delayed fracture resistance of steel sheets. N content is therefore 0.1000 % or less. A lower limit of the N content is not particularly specified. In view of production technology constraints, the N content is preferably 0.0001 % or more. The N content is therefore 0.0100 % or less. The N content is more preferably 0.0001 % or more. The N content is preferably 0.0050 % or less.

O: 0.5000 % or less

O is present as an oxide, is an initiation point for hydrogen embrittlement cracking, and causes deterioration in delayed fracture resistance of steel sheets. O content is therefore 0.5000 % or less. A lower limit of the O content is not particularly specified. In view of production technology constraints, the O content is preferably 0.0001 % or more. The O content is therefore 0.5000 % or less. The O content is more preferably 0.0001 % or more. The O content is preferably 0.4000 % or less.

A high strength steel sheet according to an embodiment of the present disclosure has a chemical composition that consists of the above components, with the balance being Fe and inevitable impurity.

The chemical composition of the additive manufacturing product described above may further contain, in mass%, at least one element, alone or in combination, selected from the group consisting of: Ti: 0.200 % or less, Nb: 0.200 % or less, V: 0.200 % or less, Ta: 0.10 % or less, W: 0.10 % or less, B: 0.0100 % or less, Cr: 1.00 % or less, Mo: 1.00 % or less, Co: 1.000 % or less, Ni: 1.00 % or less, Cu: 1.00 % or less, Sn: 0.200 % or less, Sb: 0.200 % or less, Ca: 0.0100 % or less, Mg: 0.0100 % or less, REM: 0.0100 % or less, Zr: 0.100 % or less, Te: 0.100 % or less, Hf: 0.10 % or less, and Bi: 0.200 % or less.

When each of Ti, Nb, and V are 0.200 % or less, these elements do not cause large amounts of coarse precipitates or inclusions to be generated or cause delayed fracture resistance of steel sheets to deteriorate. Therefore, the content of each of Ti, Nb, and V is respectively preferably 0.200 % or less. Lower limits of Ti, Nb, and V content are not particularly specified. Ti, Nb, and V content increases steel sheet strength by forming fine carbides, nitrides, and carbonitrides during additive manufacturing, and therefore the content of each of Ti, Nb, and V is respectively more preferably 0.001 % or more. Therefore, when Ti, Nb, and V are included, the content of each is respectively 0.200 % or less. When Ti, Nb, and V are included, the content of each is respectively more preferably 0.001 % or more. When Ti, Nb, and V are included, the content of each is respectively more preferably 0.100 % or less.

When each of Ta and W are 0.10 % or less, these elements do not cause large amounts of coarse precipitates or inclusions to be generated or cause delayed fracture resistance of steel sheets to deteriorate. Therefore, the content of each of Ta and W is respectively preferably 0.10 % or less. Lower limits of Ta and W content are not particularly specified. Ta and W content increases steel sheet strength by forming fine carbides, nitrides, and carbonitrides during additive manufacturing, and therefore the content of each of Ta and W is respectively more preferably 0.01 % or more. Therefore, when Ta and W are included, the content of each is respectively 0.10 % or less. When Ta and W are included, the content of each is respectively more preferably 0.01 % or more. When Ta and W are included, the content of each is respectively more preferably 0.08 % or less.

When B is 0.0100 % or less, cracks are not generated during additive manufacturing and the desired TS is achievable. The B content is therefore preferably 0.0100 % or less. A lower limit of the B content is not particularly specified. B is an element that improves hardenability by segregating to austenite grain boundaries during annealing, and therefore the B content is more preferably 0.0003 % or more. Therefore, when B is included, the content is 0.0100 % or less. When B is included, the content is more preferably 0.0003 % or more. When B is included, the content is more preferably 0.0080 % or less.

When each of Cr, Mo, and Ni are 1.00 % or less, these elements do not cause an increase in coarse precipitates or inclusions or cause delayed fracture resistance of steel sheets to deteriorate. Therefore, the content of each of Cr, Mo, and Ni is respectively preferably 1.00 % or less. Lower limits of Cr, Mo, and Ni content are not particularly specified. Cr, Mo, and Ni are elements that improve hardenability, and therefore the content of each of Cr, Mo, and Ni is respectively more preferably 0.01 % or more. Therefore, when Cr, Mo, and Ni are included, the content of each is respectively 1.00 % or less. When Cr, Mo, and Ni are included, the content of each is more preferably 0.01 % or more. When Cr, Mo, and Ni are included, the content of each is more preferably 0.80 % or less.

Co content of 1.000 % or less does not increase coarse precipitates and inclusions and does not deteriorate delayed fracture resistance of steel sheets. The Co content is therefore preferably 1.000 % or less. A lower limit of the Co content is not particularly specified. Co is an element that improves hardenability, and therefore the Co content is more preferably 0.001 % or more. Therefore, when Co is included, the content is 1.000 % or less. When Co is included, the content is more preferably 0.001 % or more. When Co is included, the content is more preferably 0.800 % or less.

Cu content of 1.00 % or less does not increase coarse precipitates and inclusions and does not deteriorate delayed fracture resistance of steel sheets. The Cu content is therefore preferably 1.00 % or less. A lower limit of the Cu content is not particularly specified. Cu is an element that improves hardenability, and therefore the Cu content is more preferably 0.01 % or more. Therefore, when Cu is included, the content is 1.00 % or less. When Cu is included, the content is more preferably 0.01 % or more. When Cu is included, the content is more preferably 0.80 % or less.

When Sn content is 0.200 % or less, cracks are not generated inside the steel sheet during additive manufacturing and the desired TS is achievable. Therefore, when Sn is included, the Sn content is preferably 0.200 % or less. A lower limit of the Sn content is not particularly specified. Sn is an element that improves hardenability, and therefore the Sn content is more preferably 0.001 % or more. Therefore, when Sn is included, the content is 0.200 % or less. When Sn is included, the content is more preferably 0.001 % or more. When Sn is included, the content is more preferably 0.100 % or less.

Sb content of 0.200 % or less does not increase coarse precipitates and inclusions and does not deteriorate delayed fracture resistance of steel sheets. The Sb content is therefore preferably 0.200 % or less. A lower limit of the Sb content is not particularly specified. Sb is an element that controls surface layer softening thickness and enables strength adjustment, and therefore the Sb content is more preferably 0.001 % or more. Therefore, when Sb is included, the content is 0.200 % or less. When Sb is included, the content is more preferably 0.001 % or more. When Sb is included, the content is more preferably 0.100 % or less.

When each of Ca, Mg, and REM are 0.0100 % or less, these elements do not cause an increase in coarse precipitates or inclusions or cause delayed fracture resistance of steel sheets to deteriorate. Therefore, the content of each of Ca, Mg, and REM is respectively preferably 0.0100 % or less. Lower limits of Ca, Mg, and REM content are not particularly specified. Ca, Mg, and REM are elements that spheroidize the shape of nitrides and sulfides and improve delayed fracture resistance of steel sheets, and therefore the content of each of Ca, Mg, and REM is respectively more preferably 0.0005 % or more. Therefore, when Ca, Mg, and REM are included, the content of each is respectively 0.0100 % or less. When Ca, Mg, and REM are included, the content of each is respectively more preferably 0.0005 % or more. When Ca, Mg, and REM are included, the content of each is respectively more preferably 0.0050 % or less.

When each of Zr and Te are 0.100 % or less, these elements do not cause an increase in coarse precipitates or inclusions or cause delayed fracture resistance of steel sheets to deteriorate. Therefore, the content of each of Zr and Te is respectively preferably 0.100 % or less. Lower limits of Zr and Te content are not particularly specified. Zr and Te are elements that spheroidize the shape of nitrides and sulfides and improve delayed fracture resistance of steel sheets, and therefore the content of each of Zr and Te is respectively more preferably 0.001 % or more. Therefore, when Zr and Te are included, the content of each is respectively 0.100 % or less. When Zr and Te are included, the content of each is respectively more preferably 0.001 % or more. When Zr and Te are included, the content of each is respectively more preferably 0.080 % or less.

Hf content of 0.10 % or less does not increase coarse precipitates and inclusions and does not deteriorate delayed fracture resistance of steel sheets. The Hf content is therefore preferably 0.10 % or less. A lower limit of the Hf content is not particularly specified. Hf is an element that spheroidizes the shape of nitrides and sulfides and improves delayed fracture resistance of steel sheets, and therefore the Hf content is more preferably 0.01 % or more. Therefore, when Hf is included, the content is 0.10 % or less. When Hf is included, the content is more preferably 0.01 % or more. When Hf is included, the content is more preferably 0.08 % or less.

Bi content of 0.200 % or less does not increase coarse precipitates and inclusions and does not deteriorate delayed fracture resistance of steel sheets. The Bi content is therefore preferably 0.200 % or less. A lower limit of the Bi content is not particularly specified. Bi is an element that reduces segregation, and therefore the Bi content is more preferably 0.001 % or more. Therefore, when Bi is included, the content is 0.200 % or less. When Bi is included, the content is more preferably 0.001 % or more. When Bi is included, the content is more preferably 0.100 % or less.

When the content of each of Ti, Nb, V, Ta, W, B, Cr, Mo, Ni, Co, Cu, Sn, Sb, Ca, Mg, REM, Zr, Te, Hf, and Bi described above is below the respective preferred lower limit, the effect of the present disclosure is not impaired, and therefore such elements are included as inevitable impurity.

Next, the steel microstructure of the steel matrix is described.

Area fraction of pores: 0.50 % or less

When the area fraction of pores exceeds 0.50 %, pores act as initiation points during deformation, causing early cracking, making the desired TS unachievable. Therefore, in order to secure the TS of 980 MPa or more, the area fraction of pores is 0.50 % or less. The area fraction of pores is preferably 0.30 % or less. The area fraction of pores is more preferably 0.20 % or less. A low area fraction of pores is preferable, and therefore a lower limit is not particularly limited, and may be 0 %.

The area fraction of pores is calculated by polishing a cross-section taken parallel to a layering direction of the additive manufacturing product, then observing five fields of view at $100\times$ magnification using an optical microscope, calculating area fractions of pores for each of the five fields of view from obtained images using Image-Pro software from Media Cybernetics, and determining an average value of the area fractions.

Area fraction of martensite: 90 % or more

The area fraction of martensite is 90 % or more. When the area fraction of martensite is less than 90 %, then depending on the type of residual microstructure, TS, which is required to be 980 MPa or more, or delayed fracture resistance may deteriorate. The area fraction of martensite is preferably 95 % or more. Martensite here refers to quenched martensite and tempered martensite. An upper limit of the area fraction of martensite is not particularly limited, and may be 100 %.

The area fraction of martensite is determined as follows. A thickness cross-section taken parallel to the layering direction is polished, corroded with 3 vol% nital, and ten fields of view 300 $\mu$m from the top layer in the layering direction are observed at $2000\times$ magnification using a scanning electron microscope (SEM). The area fraction of each microstructure (fresh martensite and tempered martensite) of each of the ten fields of view is calculated from obtained microstructure images using Image-Pro software from Media Cybernetics, and an average value of the area fractions is determined. Further, in the microstructure images, quenched martensite exhibits a white microstructure, and tempered martensite exhibits a white martensite with a gray internal structure.

Average aspect ratio of prior austenite grains: 1.5 or more

By setting the average aspect ratio of prior austenite grain to 1.5 or more, crack propagation due to hydrogen embrittlement may be suppressed and excellent delayed fracture resistance is obtainable. The average aspect ratio of prior austenite grains is preferably 2.0 or more. An upper limit of the average aspect ratio of prior austenite grains is not particularly limited. The average aspect ratio of prior austenite grains is preferably 20.0 or less.

The average aspect ratio of prior austenite grains is calculated by reconstructing an inverse pole figure (IPF) map of martensite obtained by electron backscatter diffraction (EBSD) at a position 300 $\mu$m from the top layer in the layering direction, then an ellipse circumscribing the reconstructed austenite grain is drawn and the major axis length of the ellipse is divided by the minor axis length.

$L_{HA}/L$, high-angle grain boundary length $L_{HA}$ divided by grain boundary length L with a misorientation angle of 20° or more and 50° or less, is 2.0 or more

The value obtained by dividing the high-angle grain boundary (HAGB) length by the grain boundary length with a misorientation angle of 20° or more and 50° or less being 2.0 or more is an important feature. Grain boundaries with a misorientation angle of 20° or more and 50° or less in martensitic microstructure describe most prior austenite grain boundaries. On the other hand, high-angle grain boundaries here are grain boundaries with a misorientation angle of 15° or more and 65° or less, and include interfaces of substructure such as lath boundaries, block boundaries, and packet boundaries in addition to prior austenite grain boundaries. The higher the proportion of lath boundaries, block boundaries, and packet boundaries relative prior austenite grain boundaries where cracks are more likely to occur, the better the delayed fracture resistance, because such boundaries suppress crack propagation. Accordingly, to secure good delayed fracture resistance, the value obtained by dividing the high-angle grain boundary length by the grain boundary length with a misorientation angle of 20° or more and 50° or less needs to be 2.0 or more. The value obtained by dividing the high-angle grain boundary length by the grain boundary length with a misorientation angle of 20° or more and 50° or less is preferably 2.1 or more. The value is more preferably 2.2 or more. The value is even more preferably 2.5 or more.

The high-angle grain boundary length and the grain boundary length with a misorientation angle of 20° or more and 50° or less were evaluated by electron backscatter diffraction (EBSD) at a distance of 300 $\mu$m from the top layer in the layering direction, measured at 1000× magnification.

The effect of the present disclosure is not impaired when the steel microstructure of the steel matrix contains, in addition to martensite, ferrite, bainite, retained austenite, and cementite residual microstructure in an area fraction totaling 10 % or less.

Ceramic particles having melting point of 2000 °C or more

The following describes the ceramic particles included in the additive manufacturing product. The inclusion of ceramic particles having a melting point of 2000 °C or more is an extremely important feature. The inclusion of ceramic particles that are harder than steel allows for a high Young's modulus. The melting point of the ceramic particles is 2000 °C or more. When the melting point of the ceramic particles is less than 2000 °C, the ceramic particles melt during additive manufacturing and cannot exist as ceramic particles in the steel microstructure to achieve a high Young's modulus. The melting point of the ceramic particles is preferably 2200 °C or more. An upper limit of the melting point of the ceramic particles is not particularly limited. The melting point of the ceramic particles is preferably 3200 °C or less.

To secure a higher Young's modulus, ceramic particle content in the additive manufacturing product, in area fraction of a region excluding pores, is 1 % or more. The ceramic particle content, in area fraction of a region excluding pores, is more preferably 5 % or more. The ceramic particle content, in area fraction of a region excluding pores, is preferably 60 % or less. The ceramic particle content, in area fraction of a region excluding pores, is more preferably 50 % or less. When the ceramic particle content, in area fraction of a region excluding pores, is 60 % or less, metal powders may be more suitably melted together in the additive manufacturing process to further reduce the area fraction of pores and achieve a more preferred TS.

The area fraction of the ceramic particles may be calculated by polishing a thickness cross-section taken parallel to a layering direction of the additive manufacturing product, then observing five fields of view at 100× magnification using an optical microscope, calculating area fractions of pores for each of the five fields of view from obtained images using Image-Pro software from Media Cybernetics, and determining an average value of the area fractions.

The ceramic particles are preferably at least one selected from the group consisting of cubic boron nitride, titanium diboride, silicon carbide, and tungsten carbide. The ceramic particle types may be included in the additive manufacturing product alone or in combination.

Tensile strength of the additive manufacturing product is 980 MPa or more. Tensile strength of the additive manufacturing product is preferably 1080 MPa or more.

Tensile strength is measured by taking a Japanese Industrial Standard JIS No. 5 test piece parallel to the layering direction of the additive manufacturing product, and conducting a tensile test in accordance with JIS Z 2241 (2011).

The following describes production conditions of the additive manufacturing product.

The production conditions for the additive manufacturing product according to an embodiment include repeatedly laying down a mixed powder of metal powder having the chemical composition described above and ceramic particles on a stage, and

irradiating the mixed powder laid down on the stage with a heat source while scanning.

The method of production, which includes repeatedly laying down the mixed powder on the stage and irradiating the metal powder laid down on the stage with a heat source while scanning, is based on a powder bed method. The mixed powder is laid down in a layer on the stage, and the mixed powder laid down on the stage is irradiated with a heat source while scanning. Irradiation with the heat source melts and solidifies the metal powder at the irradiated locations to form a metal layer. After one layer of the mixed powder is irradiated with the heat source, the process is performed of again laying down the mixed powder on the mixed powder containing the solidified metal layer and again irradiating with the heat source while scanning. Subsequently, laying down the mixed powder and irradiating the mixed powder with the heat source while scanning are repeated in this order. The additive manufacturing product is formed by this additive manufacturing process.

Laser beam or electron beam heat source

In irradiating the mixed powder laid down on the stage with a heat source while scanning, a laser beam or an electron beam may be used as the heat source.

Irradiation energy density of heat source is 50 J/mm$^3$ or more and 800 J/mm$^3$ or less

When irradiation energy density of the heat source is less than 50 J/mm$^3$, the metal powder cannot be melted sufficiently, and many pores originating from gaps between the metal powder are formed during manufacturing after solidification. Irradiation energy density of the heat source therefore needs to be 50 J/mm$^3$ or more. When the irradiation energy density

exceeds 800 J/mm$^3$, the ceramic particles melt and cannot be dispersed in the steel matrix as hard ceramic particles, and high Young's modulus cannot be obtained. In addition, thermal effects on regions already subject to additive manufacturing become more significant, morphology of prior austenite grains is spheroidized, the desired average aspect ratio is not obtained, and delayed fracture resistance deteriorates. Irradiation energy density of the heat source is therefore 50 J/mm$^3$ or more and 800 J/mm$^3$ or less. Irradiation energy density of the heat source is preferably 70 J/mm$^3$ or more. Irradiation energy density of the heat source is preferably 700 J/mm$^3$ or less.

Irradiation energy density of the heat source is calculated by the following expression.

$$E_v = P \,/\, (h \times v \times t)$$

Here, $E_v$ is irradiation energy density (J/mm$^3$), P is heat source output (W), v is scanning speed (mm/s), h is scanning space (mm), and t is layering pitch (mm).

Output of the heat source is preferably 50 W or more. Output of the heat source is preferably 500 W or less. When the output of the heat source is 500 W or less, a molten portion of the metal powder during irradiation with the heat source is prevented from becoming too deep, and this helps prevent formation of pores, called keyholes, during solidification of the molten portion. When the output of the heat source is 50 W or more, the metal powder can be sufficiently melted and the area fraction of pores in the additive manufacturing product may be more suitably reduced.

Scanning speed of the heat source is preferably 300 mm/s or more. Scanning speed of the heat source is preferably 2000 mm/s or less. When scanning speed of the heat source is 2000 mm/s or less, the metal powder melts suitably and the area fraction of pores of the additive manufacturing product may be further reduced. Further, when scanning speed of the heat source is 300 mm/s or more, a molten portion of metal during irradiation with the heat source is suitably prevented from becoming too deep, which may more suitably prevent formation of keyholes.

Scanning space is separation distance between adjacent irradiation positions (interval between center positions of beams, lasers, or the like) for a scanning heat source. Scanning space is preferably 0.05 mm or more. Scanning space is preferably 0.20 mm or less. When scanning space is 0.20 mm or less, it is possible to melt an entire surface of the metal powder that has been laid down during irradiation with the heat source, and the area fraction of pores may be further reduced. Further, when scanning space is 0.05 mm or more, a molten portion of metal during irradiation with the heat source is suitably prevented from becoming too deep, which may more suitably prevent formation of keyholes during solidification.

Further, layering pitch is "thickness per layer of the metal powder" laid down during additive manufacturing. Layering pitch is preferably 0.01 mm or more. Layering pitch is preferably 0.10 mm or less. When layering pitch is 0.10 mm or less, heat is easily transferred throughout the metal powder that has been laid down during irradiation with the heat source and the metal powder may be more suitably melted to further reduce the area fraction of pores. Further, when layering pitch is 0.01 mm or more, the number of layers is prevented from becoming too large, and the time required for additive manufacturing becomes shorter.

Other conditions of the method of production are not particularly limited. The atmosphere during additive manufacturing may be, for example, an inert atmosphere such as argon gas or the like, or nitrogen gas. Further, the environment may be under reduced pressure (including a vacuum). In particular, when using an electron beam as a heat source, the atmosphere during additive manufacturing is preferably in a reduced pressure environment (including a vacuum).

A method of producing the metal powder is not particularly limited, and a publicly known method may be used. Atomization methods are common methods of producing metal powders for additive manufacturing, and include water atomizing methods, gas atomization, centrifugal atomization, and the like. Average particle size (median size) of the metal powder is preferably 20 μm or more. Average particle size of the metal powder is preferably 200 μm or less. When average particle size of the metal powder is 20 μm or more, an increase in bond strength between the metal powder is inhibited, keeping flowability of the metal powder within a suitable range, and therefore laying down the metal powder uniformly on the stage is made easier. Further, when average particle size of the metal powder is 200 μm or less, gaps between the metal powder may be suitably prevented from becoming too large, and mechanical properties of the additive manufacturing product may be further improved.

A method of producing the ceramic particles is not particularly limited, and a publicly known method may be used. Average particle size of the ceramic particles is preferably equivalent to or less than average particle size of the metal powder, in order to lay down the mixed powder more uniformly on the stage during additive manufacturing. A lower limit of average particle size of the ceramic particles is not particularly limited.

A method of producing the mixed powder is not particularly limited, and the metal powder and the ceramic particles may be mixed by any publicly known method.

Further, shape of the additive manufacturing product is not particularly limited. The additive manufacturing product may be, for example, a member or a sheet for an automobile. Further, coating or plating treatment may be applied to the additive manufacturing product. Various other coating treatments, such as resin and oil coatings, may also be applied to the additive manufacturing product. Coating or plating treatment and various other coating treatments may be applied alone or in combination.

EXAMPLES

Metal powders having the chemical compositions listed in Table 1 with the balance consisting of Fe and inevitable impurity and ceramic particles were mixed to form mixed powders. Methods of production and average particle sizes of the metal powders and the ceramic particles are listed in Table 1. Each mixed powder was fed to an additive manufacturing device, and additive manufacturing was performed by the powder bed method under the conditions listed in Table 2 to produce a hat member having a thickness of 1.4 mm, a hat length of 200 mm, a hat width of 70 mm, a hat height of 30 mm, and a shoulder R of 4 mm. Note that additive manufacturing was performed so that the layering direction coincided with the hat height.

The steel microstructure of the resulting hat members was observed using the method described above, and tensile strength and delayed fracture resistance were investigated, and results are listed in Table 2.

Tensile tests were conducted in accordance with JIS Z 2241 (2011) by taking a JIS No. 5 test piece from a location at the bottom of the hat of each resulting member to measure tensile strength (TS).

For Young's modulus measurement, a 10 mm × 50 mm test piece was cut from a location at the bottom of each hat and Young's modulus was measured according to the American Society for Testing and Materials (ASTM) standard C1259 using a device for measuring transverse vibrational resonant frequency. According to the present disclosure, a result of 220 GPa or more is considered good.

To evaluate delayed fracture resistance, a four-point bend test piece was taken from a location at the bottom of each hat and a four-point bend test was performed in accordance with ASTM G39-99 (2016). Presence of a fracture was evaluated by applying bending stress while immersed in a solution of hydrochloric acid (pH = 3.0) at room temperature. The bending stress was set to 0.8 × TS. When no fracture occurred for 96 h or more, delayed fracture resistance was considered good (O), and when a fracture occurred in less than 96 h, delayed fracture resistance was considered poor (×). A number n of test pieces tested was 2. No fractures for both test pieces was considered good (O), and even one fracture was considered poor (×).

[Table 1-1]

Table 1-1

| Steel sample ID | Chemical composition (mass%) | | | | | | | | | | | | | | | | | | | | | | | | | | | | Metal powder average particle size (μm) | Method of producing metal powder | Ceramic particle type | Ceramic particle melting point | Ceramic particle average particle size (μm) | Method of producing ceramic particles | Remarks |
|---|---|---|---|---|---|---|---|---|---|---|---|---|---|---|---|---|---|---|---|---|---|---|---|---|---|---|---|---|---|---|---|---|---|---|---|
| | C | Si | Mn | P | S | N | Al | O | Ti | Nb | V | W | B | Ni | Cr | Mo | Co | Cu | Sn | Sb | Ta | Ca | Mg | Zr | REM | Te | Hf | B | | | | | | | |
| A | 0.350 | 0.19 | 1.07 | 0.015 | 0.0021 | 0.0116 | 0.029 | 0.0298 | - | - | - | - | - | - | - | - | - | - | - | - | - | - | - | - | - | - | - | - | 35 | Water atomization | cBN | 2730 °C | 35 | Liquid phase | Disclosed steel |
| B | 0.350 | 0.19 | 1.07 | 0.015 | 0.0021 | 0.0116 | 0.029 | 0.0298 | - | - | - | - | - | - | - | - | - | - | - | - | - | - | - | - | - | - | - | - | 35 | Water atomization | - | - | - | - | Comparative steel |
| C | 0.183 | 1.36 | 2.84 | 0.009 | 0.0008 | 0.0311 | 0.049 | 0.0227 | - | - | - | - | - | - | - | - | - | - | - | - | - | - | - | - | - | - | - | - | 40 | Gas atomization | cBN | 2730 °C | 35 | Liquid phase | Disclosed steel |
| D | 0.094 | 0.22 | 3.23 | 0.019 | 0.0016 | 0.0308 | 0.038 | 0.0246 | - | - | - | - | - | - | - | - | - | - | - | - | - | - | - | - | - | - | - | - | 40 | Gas atomization | TiB2 | 2900 °C | 35 | Gas phase | Disclosed steel |
| E | 0.766 | 0.33 | 1.53 | 0.030 | 0.0008 | 0.0330 | 0.054 | 0.0020 | - | - | - | - | - | - | - | - | - | - | - | - | - | - | - | - | - | - | - | - | 30 | Gas atomization | cBN | 2730 °C | 30 | Gas phase | Disclosed steel |
| F | 0.040 | 0.98 | 3.22 | 0.026 | 0.0028 | 0.0335 | 0.029 | 0.0339 | - | - | - | - | - | - | - | - | - | - | - | - | - | - | - | - | - | - | - | - | 34 | Water atomization | TiB2 | 2900 °C | 30 | Liquid phase | Disclosed steel |
| G | 0.213 | 2.40 | 0.20 | 0.025 | 0.0019 | 0.0122 | 0.031 | 0.0216 | - | - | - | - | - | - | - | - | - | - | - | - | - | - | - | - | - | - | - | - | 31 | Gas atomization | WC | 2870 °C | 20 | Solid phase | Disclosed steel |
| H | 0.620 | 0.59 | 0.84 | 0.032 | 0.0019 | 0.0310 | 0.037 | 0.0239 | - | - | - | - | - | - | - | - | - | - | - | - | - | - | - | - | - | - | - | - | 32 | Water atomization | cBN | 2730 °C | 25 | Liquid phase | Disclosed steel |
| I | 0.060 | 0.90 | 2.01 | 0.024 | 0.0027 | 0.0291 | 0.044 | 0.0212 | - | - | - | - | - | - | - | - | - | - | - | - | - | - | - | - | - | - | - | - | 39 | Gas atomization | SiC | 2730 °C | 30 | Liquid phase | Disclosed steel |
| J | 0.088 | 2.00 | 1.53 | 0.019 | 0.0021 | 0.0334 | 0.034 | 0.0258 | - | - | - | - | - | - | - | - | - | - | - | - | - | - | - | - | - | - | - | - | 38 | Gas atomization | TiB2 | 2900 °C | 30 | Gas phase | Disclosed steel |
| K | 0.312 | 0.22 | 3.49 | 0.024 | 0.0023 | 0.0168 | 0.028 | 0.0330 | - | - | - | - | - | - | - | - | - | - | - | - | - | - | - | - | - | - | - | - | 37 | Water atomization | TiB2 | 2900 °C | 30 | Liquid phase | Disclosed steel |
| L | 0.125 | 0.36 | 5.36 | 0.027 | 0.0026 | 0.0319 | 0.030 | 0.0261 | - | - | - | - | - | - | - | - | - | - | - | - | - | - | - | - | - | - | - | - | 34 | Gas atomization | cBN | 2730 °C | 30 | Gas phase | Disclosed steel |
| M | 0.192 | 0.44 | 0.52 | 0.025 | 0.0025 | 0.0144 | 0.035 | 0.0274 | - | - | - | - | - | - | - | - | - | - | - | - | - | - | - | - | - | - | - | - | 37 | Water atomization | cBN | 2730 °C | 30 | Solid phase | Disclosed steel |
| N | 0.185 | 0.61 | 4.53 | 0.021 | 0.0029 | 0.0301 | 0.039 | 0.0253 | - | - | - | - | - | - | - | - | - | - | - | - | - | - | - | - | - | - | - | - | 30 | Gas atomization | SiC | 2730 °C | 30 | Liquid phase | Disclosed steel |
| O | 0.431 | 0.88 | 1.07 | 0.028 | 0.0022 | 0.0180 | 0.038 | 0.0226 | - | - | - | - | - | - | - | - | - | - | - | - | - | - | - | - | - | - | - | - | 32 | Gas atomization | TiB2 | 2900 °C | 30 | Solid phase | Disclosed steel |
| P | 1.006 | 0.81 | 3.46 | 0.020 | 0.0014 | 0.0238 | 0.044 | 0.0209 | - | - | - | - | - | - | - | - | - | - | - | - | - | - | - | - | - | - | - | - | 37 | Gas atomization | cBN | 2730 °C | 30 | Gas phase | Comparative steel |
| Q | 0.024 | 2.09 | 3.54 | 0.018 | 0.0027 | 0.0157 | 0.050 | 0.0309 | - | - | - | - | - | - | - | - | - | - | - | - | - | - | - | - | - | - | - | - | 40 | Water atomization | WC | 2870 °C | 40 | Liquid phase | Comparative steel |
| R | 0.205 | 3.16 | 2.02 | 0.029 | 0.0027 | 0.0286 | 0.037 | 0.0284 | - | - | - | - | - | - | - | - | - | - | - | - | - | - | - | - | - | - | - | - | 33 | Gas atomization | cBN | 2730 °C | 30 | Gas phase | Comparative steel |
| S | 0.185 | 0.31 | 8.30 | 0.027 | 0.0023 | 0.0144 | 0.033 | 0.0213 | - | - | - | - | - | - | - | - | - | - | - | - | - | - | - | - | - | - | - | - | 34 | Gas atomization | SiC | 2730 °C | 30 | Liquid phase | Comparative steel |
| T | 0.082 | 0.28 | 0.04 | 0.023 | 0.0023 | 0.0177 | 0.037 | 0.0339 | - | - | - | - | - | - | - | - | - | - | - | - | - | - | - | - | - | - | - | - | 36 | Water atomization | TiB2 | 2900 °C | 35 | Liquid phase | Comparative steel |

Underlined: indicates outside the scope of the disclosure. -: indicates content at the level of inevitable impurity.

cBN: cubic boron nitride, TiB2: titanium diboride, SiC: silicon carbide, WC: tungsten carbide

[Table 1-2]

Table 1-2

| Steel sample ID | C | Si | Mn | P | S | N | Al | O | Ti | Nb | V | W | B | Ni | Cr | Mo | Co | Cu | Sn | Sb | Ta | Ca | Mg | Zr | REM | Te | Hf | B | Metal powder average particle size (µm) | Method of producing metal powder | Ceramic particle type | Ceramic particle melting point | Ceramic particle average particle size (µm) | Method of producing ceramic particles | Remarks |
|---|---|---|---|---|---|---|---|---|---|---|---|---|---|---|---|---|---|---|---|---|---|---|---|---|---|---|---|---|---|---|---|---|---|---|---|
| | | | | | | | | | | | | | | | | | | | | | | | | | | | | | | | | | | | |
| | | | | | | | | | | | | | | | | | | | Chemical composition (mass%) | | | | | | | | | | | | | | | |
| U | 0.143 | 0.77 | 3.48 | 0.019 | 0.0024 | 0.0122 | 0.036 | 0.0305 | 0.035 | - | - | - | - | - | - | - | - | - | - | - | - | - | - | - | - | - | - | - | 30 | Water atomization | cBN | 2730 °C | 30 | Gas phase | Disclosed steel |
| V | 0.511 | 0.71 | 4.49 | 0.033 | 0.0024 | 0.0142 | 0.043 | 0.0290 | - | 0.020 | - | - | - | - | - | - | - | - | - | - | - | - | - | - | - | - | - | - | 34 | Water atomization | SiC | 2730 °C | 25 | Liquid phase | Disclosed steel |
| W | 0.425 | 1.14 | 3.61 | 0.032 | 0.0023 | 0.0219 | 0.044 | 0.0202 | - | - | 0.146 | - | - | - | - | - | - | - | - | - | - | - | - | - | - | - | - | - | 37 | Gas atomization | cBN | 2730 °C | 25 | Liquid phase | Disclosed steel |
| X | 0.100 | 1.18 | 4.06 | 0.030 | 0.0024 | 0.0339 | 0.042 | 0.0340 | - | - | - | 0.020 | - | - | - | - | - | - | - | - | - | - | - | - | - | - | - | - | 30 | Water atomization | cBN | 2730 °C | 30 | Gas phase | Disclosed steel |
| Y | 0.150 | 0.40 | 3.40 | 0.033 | 0.0023 | 0.0141 | 0.043 | 0.0265 | - | - | - | - | 0.0021 | - | - | - | - | - | - | - | - | - | - | - | - | - | - | - | 40 | Water atomization | TiB2 | 2900 °C | 30 | Liquid phase | Disclosed steel |
| Z | 0.191 | 0.67 | 5.94 | 0.025 | 0.0024 | 0.0217 | 0.016 | 0.0303 | - | - | - | - | - | 0.530 | - | - | - | - | - | - | - | - | - | - | - | - | - | - | 35 | Water atomization | TiB2 | 2900 °C | 30 | Solid phase | Disclosed steel |
| AA | 0.302 | 0.53 | 6.36 | 0.023 | 0.0025 | 0.0285 | 0.056 | 0.0329 | - | - | - | - | - | - | 0.340 | - | - | - | - | - | - | - | - | - | - | - | - | - | 32 | Water atomization | cBN | 2730 °C | 30 | Solid phase | Disclosed steel |
| AB | 0.103 | 1.04 | 2.10 | 0.025 | 0.0027 | 0.0251 | 0.027 | 0.0248 | - | - | - | - | - | - | - | 0.302 | - | - | - | - | - | - | - | - | - | - | - | - | 39 | Gas atomization | cBN | 2730 °C | 30 | Gas phase | Disclosed steel |
| AC | 0.256 | 1.46 | 1.99 | 0.015 | 0.0024 | 0.0311 | 0.033 | 0.0290 | - | - | - | - | - | - | - | - | 0.189 | - | - | - | - | - | - | - | - | - | - | - | 39 | Water atomization | cBN | 2730 °C | 35 | Liquid phase | Disclosed steel |
| AD | 0.080 | 0.52 | 3.02 | 0.023 | 0.0024 | 0.0158 | 0.041 | 0.0289 | - | - | - | - | - | - | - | - | - | 0.12 | - | - | - | - | - | - | - | - | - | - | 39 | Water atomization | WC | 2870 °C | 30 | Liquid phase | Disclosed steel |
| AE | 0.123 | 0.55 | 1.48 | 0.025 | 0.0021 | 0.0184 | 0.038 | 0.0272 | - | - | - | - | - | - | - | - | - | - | 0.005 | - | - | - | - | - | - | - | - | - | 33 | Water atomization | cBN | 2730 °C | 30 | Gas phase | Disclosed steel |
| AF | 0.156 | 0.41 | 2.49 | 0.015 | 0.0020 | 0.0164 | 0.032 | 0.0309 | - | - | - | - | - | - | - | - | - | - | - | 0.052 | - | - | - | - | - | - | - | - | 36 | Water atomization | SiC | 2730 °C | 30 | Liquid phase | Disclosed steel |
| AG | 0.136 | 0.69 | 3.59 | 0.020 | 0.0021 | 0.0141 | 0.028 | 0.0262 | - | - | - | - | - | - | - | - | - | - | - | - | 0.006 | - | - | - | - | - | - | - | 35 | Water atomization | cBN | 2730 °C | 30 | Liquid phase | Disclosed steel |
| AH | 0.201 | 0.37 | 1.22 | 0.033 | 0.0029 | 0.0329 | 0.031 | 0.0320 | - | 0.021 | - | - | - | - | - | - | - | - | 0.006 | - | - | - | - | - | - | - | - | - | 34 | Water atomization | TiB2 | 2900 °C | 30 | Liquid phase | Disclosed steel |
| AI | 0.391 | 0.24 | 1.01 | 0.026 | 0.0027 | 0.0323 | 0.033 | 0.0244 | - | 0.033 | - | - | - | - | - | - | - | - | - | - | 0.010 | - | - | - | - | - | - | - | 31 | Gas atomization | cBN | 2730 °C | 35 | Gas phase | Disclosed steel |
| AJ | 0.503 | 0.98 | 1.49 | 0.023 | 0.0024 | 0.0121 | 0.041 | 0.0222 | - | - | - | - | - | - | - | - | - | - | - | - | - | 0.0031 | - | - | - | - | - | - | 32 | Gas atomization | cBN | 2730 °C | 35 | Liquid phase | Disclosed steel |
| AK | 0.422 | 1.00 | 0.98 | 0.021 | 0.0021 | 0.0280 | 0.035 | 0.0232 | - | - | - | - | - | - | - | - | - | - | - | - | - | - | 0.0048 | - | - | - | - | - | 38 | Gas atomization | cBN | 2730 °C | 35 | Solid phase | Disclosed steel |
| AL | 0.443 | 0.03 | 1.25 | 0.025 | 0.0027 | 0.0322 | 0.039 | 0.0269 | - | - | - | - | - | - | - | - | - | - | - | - | - | - | - | 0.0106 | - | - | - | - | 32 | Water atomization | TiB2 | 2900 °C | 30 | Liquid phase | Disclosed steel |
| AM | 0.303 | 0.05 | 1.24 | 0.018 | 0.0028 | 0.0196 | 0.036 | 0.0262 | - | - | - | - | - | - | - | - | - | - | - | - | - | - | - | - | 0.0021 | - | - | - | 34 | Water atomization | cBN | 2730 °C | 30 | Liquid phase | Disclosed steel |
| AN | 0.300 | 0.81 | 2.75 | 0.015 | 0.0020 | 0.0234 | 0.036 | 0.0222 | - | - | - | - | - | - | - | - | - | - | - | - | - | - | - | - | - | 0.0101 | - | - | 35 | Gas atomization | cBN | 2730 °C | 30 | Solid phase | Disclosed steel |
| AO | 0.227 | 0.54 | 2.77 | 0.016 | 0.0022 | 0.0254 | 0.038 | 0.0310 | - | - | - | - | - | - | - | - | - | - | - | - | - | - | - | - | - | - | 0.0540 | - | 35 | Gas atomization | cBN | 2730 °C | 30 | Solid phase | Disclosed steel |
| AP | 0.228 | 1.03 | 2.80 | 0.017 | 0.0022 | 0.0240 | 0.036 | 0.0290 | - | - | - | - | - | - | - | - | - | - | - | - | - | - | - | - | - | - | - | 0.0724 | 35 | Gas atomization | cBN | 2730 °C | 30 | Solid phase | Disclosed steel |

cBN: cubic boron nitride, TiB₂: titanium diboride, SiC: silicon carbide, WC: tungsten carb[ide]

Table 2-1

| N-o. | Steel sam-ple ID | Heat source | Additive manufacturing | | | | | Steel microstructure | | | | | Residual microstruc-ture | TS | Young's modu-lus | Delayed fracture resis-tance | Remarks |
|---|---|---|---|---|---|---|---|---|---|---|---|---|---|---|---|---|---|
| | | | Heat sour-ce out-put (W) | Scan-ning speed (mm/s) | Scan-ning space (mm) | Layer-ing pitch (mm) | Irradia-tion energy density (J/mm$^3$) | Area fraction of cera-mic parti-cles (%) | Area frac-tion of pores (%) | Area fraction of marten-site (%) | Aver-age aspect ratio of prior austenite grains | HAGB/ 20°-50° grain bound-ary length | | (MP-a) | (GPa) | | |
| 1 | A | Laser | 330 | 400 | 0.10 | 0.04 | 206.3 | 10.4 | 0.03 | 94.9 | 2.96 | 2.83 | α,γ,B,θ | 1530 | 252 | O | Example |
| 2 | A | Laser | 200 | 1000 | 0.10 | 0.04 | 50.0 | 7.2 | 0.46 | 96.1 | 4.87 | 2.13 | α,γ,B | 1559 | 238 | O | Example |
| 3 | A | Laser | 150 | 800 | 0.10 | 0.04 | 46.9 | 29.8 | 0.00 | 95.3 | 3.40 | 7.95 | α,γ,B | 1570 | 341 | O | Example |
| 4 | A | Laser | 200 | 1000 | 0.12 | 0.04 | <u>41.7</u> | 20.1 | <u>2.14</u> | 94.2 | 3.42 | 2.05 | α,γ,B | <u>902</u> | 296 | O | Compara-tive Exam-ple |
| 5 | A | Laser | 400 | 800 | 0.05 | 0.01 | <u>10000</u> | <u>0.0</u> | 0.08 | 95.1 | <u>1.09</u> | 4.32 | α,γ,B,θ | 1461 | <u>204</u> | × | Compara-tive Exam-ple |
| 6 | B | Laser | 330 | 400 | 0.10 | 0.04 | 206.3 | <u>0.0</u> | 0.04 | 95.3 | 3.82 | 3.66 | α,γ,B,θ | 1476 | <u>205</u> | O | Compara-tive Exam-ple |
| 7 | C | Elec-tron beam | 330 | 400 | 0.10 | 0.04 | 206.3 | 33.7 | 0.13 | 97.6 | 4.57 | 3.61 | α,γ,B,θ | 1454 | 358 | O | Example |
| 8 | D | Electron beam | 330 | 400 | 0.10 | 0.04 | 206.3 | 36.9 | 0.13 | 96.6 | 4.61 | 3.35 | α,γ,B,θ | 1385 | 321 | O | Example |
| 9 | E | Laser | 330 | 400 | 0.10 | 0.04 | 206.3 | 26.8 | 0.05 | 100.0 | 4.25 | 2.77 | - | 2067 | 327 | O | Example |
| 10 | F | Laser | 330 | 400 | 0.10 | 0.04 | 206.3 | 37.7 | 0.05 | 96.2 | 4.90 | 5.09 | α,γ,B,θ | 1343 | 324 | O | Example |
| 11 | G | Laser | 330 | 400 | 0.10 | 0.04 | 206.3 | 11.2 | 0.08 | 91.0 | 2.18 | 6.01 | α,γ,B,θ | 1303 | 253 | O | Example |
| 12 | H | Laser | 330 | 400 | 0.10 | 0.04 | 206.3 | 15.1 | 0.03 | 98.5 | 2.75 | 6.99 | α,γ,B,θ | 1885 | 274 | O | Example |

| N-o. | Steel sam-ple ID | Heat source | Additive manufacturing | | | | | Steel microstructure | | | | | Residual microstruc-ture | TS | Young's modu-lus | Delayed fracture resis-tance | Remarks |
|---|---|---|---|---|---|---|---|---|---|---|---|---|---|---|---|---|---|
| | | | Heat sour-ce out-put (W) | Scan-ning speed (mm/s) | Scan-ning space (mm) | Layer-ing pitch (mm) | Irradia-tion energy density (J/mm$^3$) | Area fraction of cera-mic parti-cles (%) | Area frac-tion of pores (%) | Area fraction of marten-site (%) | Aver-age aspect ratio of prior austenite grains | HAGB/ 20°-50° grain bound-ary length | | (MP-a) | (GPa) | | |
| 13 | I | Laser | 330 | 400 | 0.10 | 0.04 | 206.3 | 23.7 | 0.17 | 92.9 | 3.10 | 7.09 | α,γ,B,θ | 1223 | 261 | O | Example |
| 14 | J | Laser | 330 | 400 | 0.10 | 0.04 | 206.3 | 32.8 | 0.04 | 92.8 | 3.99 | 2.81 | α,γ,B,θ | 1340 | 308 | O | Example |
| 15 | K | Laser | 330 | 400 | 0.10 | 0.04 | 206.3 | 5.6 | 0.13 | 99.9 | 3.03 | 7.25 | α,γ,B,θ | 1408 | 223 | O | Example |
| 16 | L | Electron beam | 330 | 400 | 0.10 | 0.04 | 206.3 | 21.6 | 0.11 | 100.0 | 3.50 | 6.52 | - | 1278 | 303 | O | Example |
| 17 | M | Electron beam | 330 | 400 | 0.10 | 0.04 | 206.3 | 28.6 | 0.09 | 89.6 | 3.28 | 7.46 | α,γ,B,θ | 1417 | 335 | O | Example |
| 18 | N | Laser | 330 | 400 | 0.10 | 0.04 | 206.3 | 17.0 | 0.05 | 100.0 | 2.37 | 4.80 | - | 1316 | 245 | O | Example |
| 19 | O | Laser | 330 | 400 | 0.10 | 0.04 | 206.3 | 35.5 | 0.15 | 96.7 | 2.08 | 4.97 | α,γ,B,θ | 1720 | 317 | O | Example |
| 20 | P | Electron beam | 330 | 400 | 0.10 | 0.04 | 206.3 | 21.0 | <u>1.90</u> | 100.0 | 4.58 | 2.38 | - | <u>940</u> | 301 | O | Compara-tive Exam-ple |
| 21 | Q | Laser | 330 | 400 | 0.10 | 0.04 | 206.3 | 9.5 | 0.18 | 97.4 | 3.56 | <u>1.21</u> | α,γ,B,θ | 1110 | 245 | × | Compara-tive Exam-ple |
| 22 | R | Laser | 330 | 400 | 0.10 | 0.04 | 206.3 | 26.3 | 0.21 | 97.1 | 4.50 | 4.95 | α,γ,B,θ | 1414 | 325 | × | Compara-tive Exam-ple |
| 23 | S | Laser | 330 | 400 | 0.10 | 0.04 | 206.3 | 23.1 | 0.11 | <u>80.3</u> | 2.12 | 4.77 | γ | 1367 | 259 | × | Compara-tive Exam-ple |

14

(continued)

| N-o. | Steel sam-ple ID | Heat source | Additive manufacturing | | | | | Steel microstructure | | | | | Residual microstruc-ture | TS (MP-a) | Young's modu-lus (GPa) | Delayed fracture resis-tance | Remarks |
|---|---|---|---|---|---|---|---|---|---|---|---|---|---|---|---|---|---|
| | | | Heat sour-ce out-put (W) | Scan-ning speed (mm/s) | Scan-ning space (mm) | Layer-ing pitch (mm) | Irradia-tion energy density (J/mm$^3$) | Area fraction of cera-mic parti-cles (%) | Area frac-tion of pores (%) | Area fraction of marten-site (%) | Aver-age aspect ratio of prior austenite grains | HAGB/ 20°-50° grain bound-ary length | | | | | |
| 24 | T | Laser | 330 | 400 | 0.10 | 0.04 | 206.3 | 14.3 | 0.07 | <u>79.1</u> | 2.23 | 4.56 | $\alpha,\gamma,B,\theta$ | <u>967</u> | 250 | O | Compara-tive Exam-ple |

Underlined: indicates outside the scope of the disclosure.
a: ferrite, $\gamma$: retained austenite, B: bainite, $\theta$: cementite

Table 2-2

| N-o. | Steel sam-ple ID | Heat source | Heat sour-ce out-put (W) | Scan-ning speed (mm/s) | Scan-ning space (mm) | Layer-ing pitch (mm) | Irradia-tion energy density (J/mm³) | Area fraction of cera-mic parti-cles (%) | Area frac-tion of pores (%) | Area fraction of marten-site (%) | Aver-age aspect ratio of prior austenite grains | HAGB/20°-50° grain bound-ary length | Residual microstruc-ture | TS (MP-a) | Young'-s modu-lus (GPa) | Delayed fracture resis-tance | Re-marks |
|---|---|---|---|---|---|---|---|---|---|---|---|---|---|---|---|---|---|
| 25 | U | Laser | 330 | 400 | 0.10 | 0.04 | 206.3 | 32.2 | 0.08 | 98.1 | 4.13 | 4.08 | α,γ,B,θ | 1398 | 352 | O | Example |
| 26 | V | Laser | 330 | 400 | 0.10 | 0.04 | 206.3 | 6.0 | 0.13 | 100.0 | 3.21 | 4.84 | - | 1708 | 228 | O | Example |
| 27 | W | Laser | 330 | 400 | 0.10 | 0.04 | 206.3 | 8.3 | 0.13 | 100.0 | 2.29 | 6.89 | α,γ,B,θ | 1590 | 243 | O | Exam-ple |
| 28 | X | Elec-tron beam | 330 | 400 | 0.10 | 0.04 | 206.3 | 28.9 | 0.18 | 99.0 | 2.81 | 7.45 | α,γ,B,θ | 1316 | 336 | O | Example |
| 29 | Y | Laser | 330 | 400 | 0.10 | 0.04 | 206.3 | 10.3 | 0.14 | 97.9 | 4.29 | 3.29 | α,γ,B,θ | 1208 | 237 | O | Example |
| 30 | Z | Laser | 330 | 400 | 0.10 | 0.04 | 206.3 | 16.3 | 0.18 | 100.0 | 2.58 | 6.80 | - | 1318 | 256 | O | Exam-ple |
| 31 | AA | Elec-tron beam | 330 | 400 | 0.10 | 0.04 | 206.3 | 23.9 | 0.11 | 100.0 | 3.12 | 4.08 | - | 1512 | 314 | O | Example |
| 32 | AB | Laser | 330 | 400 | 0.10 | 0.04 | 206.3 | 14.5 | 0.13 | 95.5 | 4.06 | 4.34 | α,γ,B,θ | 1185 | 271 | O | Example |
| 33 | AC | Laser | 330 | 1000 | 0.10 | 0.04 | 82.5 | 15.5 | 0.10 | 95.4 | 2.86 | 4.57 | α,γ,B | 1285 | 277 | O | Exam-ple |
| 34 | AD | Elec-tron beam | 330 | 400 | 0.10 | 0.04 | 206.3 | 18.2 | 0.12 | 96.0 | 3.82 | 2.53 | α,γ,B,θ | 1189 | 282 | O | Exam-ple |

(continued)

| N-o. | Steel sample ID | Additive manufacturing | | | | | | Steel microstructure | | | | | | TS (MPa) | Young's modulus (GPa) | Delayed fracture resistance | Remarks |
|---|---|---|---|---|---|---|---|---|---|---|---|---|---|---|---|---|---|
| | | Heat source | Heat source output (W) | Scanning speed (mm/s) | Scanning space (mm) | Layering pitch (mm) | Irradiation energy density (J/mm³) | Area fraction of ceramic particles (%) | Area fraction of pores (%) | Area fraction of martensite (%) | Average aspect ratio of prior austenite grains | HAGB/20°-50° grain boundary length | Residual microstructure | | | | |
| 35 | AE | Laser | 330 | 400 | 0.10 | 0.04 | 206.3 | 11.2 | 0.10 | 92.1 | 3.83 | 3.93 | α,γ,B,θ | 1179 | 256 | O | Example |
| 36 | AF | Laser | 330 | 400 | 0.10 | 0.04 | 206.3 | 7.9 | 0.02 | 95.8 | 2.53 | 6.32 | α,γ,B,θ | 1202 | 224 | O | Example |
| 37 | AG | Laser | 330 | 400 | 0.10 | 0.04 | 206.3 | 36.7 | 0.02 | 98.2 | 3.23 | 5.29 | α,γ,B,θ | 1429 | 372 | O | Example |
| 38 | AH | Laser | 330 | 400 | 0.10 | 0.04 | 206.3 | 19.7 | 0.03 | 92.7 | 2.75 | 4.92 | α,γ,B,θ | 1359 | 267 | O | Example |
| 39 | AI | Laser | 330 | 400 | 0.10 | 0.04 | 206.3 | 35.9 | 0.01 | 95.5 | 2.34 | 5.23 | α,γ,B,θ | 1679 | 368 | O | Example |
| 40 | AJ | Laser | 330 | 400 | 0.10 | 0.04 | 206.3 | 30.1 | 0.09 | 98.6 | 4.84 | 2.44 | α,γ,B,θ | 1773 | 342 | O | Example |
| 41 | AK | Laser | 330 | 400 | 0.10 | 0.04 | 206.3 | 5.0 | 0.01 | 96.4 | 3.64 | 2.65 | α,γ,B,θ | 1569 | 228 | O | Example |
| 42 | AL | Laser | 330 | 400 | 0.10 | 0.04 | 206.3 | 33.6 | 0.06 | 96.8 | 3.29 | 7.40 | α,γ,B,θ | 1724 | 311 | O | Example |
| 43 | AM | Laser | 330 | 400 | 0.10 | 0.04 | 206.3 | 18.4 | 0.12 | 94.5 | 3.91 | 3.75 | α,γ,B,θ | 1477 | 289 | O | Example |
| 44 | AN | Laser | 330 | 400 | 0.10 | 0.04 | 206.3 | 15.6 | 0.11 | 98.8 | 2.14 | 2.55 | α,γ,B,θ | 1720 | 277 | O | Example |
| 45 | AO | Laser | 330 | 400 | 0.10 | 0.04 | 206.3 | 17.1 | 0.13 | 97.1 | 2.34 | 2.44 | α,γ,B,θ | 1554 | 281 | O | Example |

(continued)

| N-o. | Steel sample ID | Additive manufacturing | | | | | | Steel microstructure | | | | | | TS | Young's modulus | Delayed fracture resistance | Remarks |
|---|---|---|---|---|---|---|---|---|---|---|---|---|---|---|---|---|---|
| | | Heat source | Heat source output | Scanning speed | Scanning space | Layering pitch | Irradiation energy density | Area fraction of ceramic particles | Area fraction of pores | Area fraction of martensite | Average aspect ratio of prior austenite grains | HAGB/20°-50° grain boundary length | Residual microstructure | | | | |
| | | | (W) | (mm/s) | (mm) | (mm) | (J/mm$^3$) | (%) | (%) | (%) | | | | (MPa) | (GPa) | | |
| 46 | AP | Laser | 330 | 400 | 0.10 | 0.04 | 206.3 | 18.9 | 0.15 | 97.4 | 2.54 | 2.40 | α,γ,B,θ | 1660 | 288 | O | Example |

a: ferrite, γ: retained austenite, B: bainite, θ: cementite

All of the Examples of additive manufacturing products according to the present disclosure had a TS of 980 MPa or more, and excellent delayed fracture resistance. In contrast, for the Comparative Examples, at least one property, TS or delayed fracture resistance, was poor.

**Claims**

1. An additive manufacturing product comprising a steel matrix and ceramic particles dispersed in the steel matrix, wherein

    the steel matrix comprises a chemical composition containing, in mass%,
    C: 0.030 % or more and 0.800 % or less,
    Si: 0.01 % or more and 2.50 % or less,
    Mn: 0.10 % or more and 8.00 % or less,
    P: 0.100 % or less,
    S: 0.0200 % or less,
    Al: 0.100 % or less,
    N: 0.1000 % or less, and
    O: 0.5000 % or less,
    with the balance being Fe and inevitable impurity,
    and a steel microstructure wherein

    area fraction of pores is 0.50 % or less,
    area fraction of martensite in a region excluding pores is 90 % or more,
    average aspect ratio of prior austenite grains is 1.5 or more, and $L_{HA}/L$, high-angle grain boundary length $L_{HA}$ divided by grain boundary length L with a misorientation angle of 20° or more and 50° or less, is 2.0 or more, and

    melting point of the ceramic particles is 2000 °C or more.

2. The additive manufacturing product according to claim 1, the chemical composition further containing, in mass%, at least one element selected from the group consisting of:

    Ti: 0.200 % or less,
    Nb: 0.200 % or less,
    V: 0.200 % or less,
    Ta: 0.10 % or less,
    W: 0.10 % or less,
    B: 0.0100 % or less,
    Cr: 1.00 % or less,
    Mo: 1.00 % or less,
    Co: 1.000 % or less,
    Ni: 1.00 % or less,
    Cu: 1.00 % or less,
    Sn: 0.200 % or less,
    Sb: 0.200 % or less,
    Ca: 0.0100 % or less,
    Mg: 0.0100 % or less,
    REM: 0.0100 % or less,
    Zr: 0.100 % or less,
    Te: 0.100 % or less,
    Hf: 0.10 % or less, and
    Bi: 0.200 % or less.

3. The additive manufacturing product according to claim 1 or 2, wherein the ceramic particles are at least one selected from the group consisting of cubic boron nitride, titanium diboride, silicon carbide, and tungsten carbide.

4. A method of producing the additive manufacturing product according to any one of claims 1 to 3, the method comprising:
repeatedly

laying down a mixed powder of metal powder having the chemical composition according to claim 1 or 2 and ceramic particles on a stage, and
irradiating the mixed powder laid down on the stage with a heat source while scanning.

5. The method of producing the additive manufacturing product according to claim 4, wherein the heat source is a laser beam or an electron beam.

6. The method of producing the additive manufacturing product according to claim 4 or 5, wherein irradiation energy density of the heat source is 50 J/mm$^3$ or more and 800 J/mm$^3$ or less.

## INTERNATIONAL SEARCH REPORT

| International application No. |
| --- |
| **PCT/JP2022/043823** |

**A. CLASSIFICATION OF SUBJECT MATTER**

*C22C 38/00*(2006.01)i; *C22C 38/06*(2006.01)i; *C22C 38/60*(2006.01)i; *B33Y 10/00*(2015.01)i; *B33Y 80/00*(2015.01)i; *B33Y 70/00*(2020.01)i; *B22F 10/28*(2021.01)i; *B22F 10/36*(2021.01)i; *B22F 12/41*(2021.01)i

FI: C22C38/00 301Z; C22C38/00 302A; C22C38/06; C22C38/60; B22F10/28; B22F10/36; B22F12/41; B33Y10/00; B33Y70/00; B33Y80/00

According to International Patent Classification (IPC) or to both national classification and IPC

**B. FIELDS SEARCHED**

Minimum documentation searched (classification system followed by classification symbols)

C22C38/00; C22C38/06; C22C38/60; B33Y10/00; B33Y80/00; B33Y70/00; B22F10/28; B22F10/36; B22F12/41

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2019/220917 A1 (HITACHI METALS, LTD.) 21 November 2019 (2019-11-21) entire text, all drawings | 1-6 |
| A | JP 2021-85051 A (SANYO SPECIAL STEEL CO., LTD.) 03 June 2021 (2021-06-03) entire text | 1-6 |
| A | JP 2017-179589 A (JFE STEEL CORP.) 05 October 2017 (2017-10-05) entire text, all drawings | 1-6 |
| A | JP 2017-179540 A (JFE STEEL CORP.) 05 October 2017 (2017-10-05) entire text | 1-6 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **20 January 2023** | **07 February 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/043823**

| Patent document cited in search report | | | Publication date (day/month/year) | Patent family member(s) | | | Publication date (day/month/year) |
|---|---|---|---|---|---|---|---|
| WO | 2019/220917 | A1 | 21 November 2019 | US | 2021/0040591 | A1 | |
| | | | | entire text, all drawings | | | |
| | | | | EP | 3795707 | A1 | |
| | | | | CN | 111954725 | A | |
| JP | 2021-85051 | A | 03 June 2021 | (Family: none) | | | |
| JP | 2017-179589 | A | 05 October 2017 | US | 2019/0249268 | A1 | |
| | | | | entire text, all drawings | | | |
| | | | | WO | 2017/168948 | A1 | |
| | | | | EP | 3438316 | A1 | |
| | | | | CN | 108884541 | A | |
| JP | 2017-179540 | A | 05 October 2017 | (Family: none) | | | |

Form PCT/ISA/210 (patent family annex) (January 2015)

**EP 4 471 170 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019203148 A